# EUROPÄISCHE PATENTSCHRIFT

(11) **EP 1 320 231 B1**
(45) Veröffentlichungstag und Bekanntmachung des Hinweises auf die Patenterteilung: **03.05.2006**
(21) Anmeldenummer: 02027846.1
(22) Anmeldetag: 12.12.2002
(51) Int. Cl.: H04L 12/66, H04L 12/64

(54) **Anordnung zur Minimierung der Übertragungsverzögerung zwischen kanalorientierten und paketorientierten Daten**
Device for minimizing transfer delay between circuit and packet switched data
Appareil permettant de minimiser le retard de transfert entre des données en commutation de circuit et en commutation de paquets

(30) Priorität: 14.12.2001 DE 10161509
(43) Veröffentlichungstag der Anmeldung: 18.06.2003
(73) Patentinhaber: SIEMENS AKTIENGESELLSCHAFT, 80333 München (DE)
(72) Erfinder: Riedel, Manfred, 81246 München (DE)

(56) Entgegenhaltungen:
- EP-A- 0 829 995
- EP-A- 0 938 218
- WO-A-00/28778
- WO-A-01/80503
- DE-A- 19 728 878

## Beschreibung

Die Erfindung betrifft ein Verfahren und eine Anordnung zum Transport von Datenpaketen eines Datenstroms zwischen einem paketorientierten Datennetz und mindestens einem kanalorientierten Datenstrom-Verarbeitungsmodul gemäß dem Oberbegriff des Patentanspruchs 1 bzw. des Patentanspruchs 6. Insbesondere betrifft die Erfindung einen Datentransport im Rahmen einer sogenannten Stream-Architektur.

Datenströme und insbesondere Kommunikationsdatenströme, wie z.B. Sprach-, Video- und/oder Multimediadatenströme, werden in zunehmendem Maße in Form von diskreten Datenpaketen über paketorientierte Netzwerke, wie z.B. lokale Netze (LAN) oder Weitverkehrsnetze (WAN) übertragen. Zum Empfang und zur Weiterverarbeitung von über ein paketorientiertes Netzwerk übertragenen Datenströmen sind dessen Datenpakete aus dem Netzwerk zu extrahieren und zweckentsprechenden Datenverarbeitungsmodulen, wie z.B. Software-Anwendungen oder digitalen Signalprozessoren, zuzuführen. Die Weiterverarbeitung kann hierbei z.B. eine Dekodierung, Dekomprimierung, Ausgabe oder eine Umsetzung auf ein leitungsorientiertes Übertragungsprotokoll betreffen. Derartige Datenstrom-Verarbeitungsmodule sind meist vielkanalig ausgestaltet.

Zur Übertragung von Datenpaketen eines Datenstroms zwischen einem paketorientiertem Netzwerk und einem kanalorientierten Datenstrom-Verarbeitungsmodul erweist sich die aus dem Umfeld des Betriebssystems Unix bekannte, sogenannte Stream-Architektur als besonders vorteilhaft. Die Stream-Architektur setzt sich aus vorgegebenen Schichten von Standard-Softwarekomponenten modular zusammen. Infolgedessen ist die Stream-Architektur sehr portabel und erlaubt eine einfache Integration zusätzlicher Dienste. Zur Übertragung von Datenpaketen zwischen einem paketorientierten Netzwerk und einem kanalorientierten Datenstrom-Verarbeitungsmodul sind gemäß der Stream-Architektur ein Schnittstellenmodul zum Austausch der Datenpakete mit dem Netzwerk, ein Schnittstellentreiber, ein sog. Voice-Multiplexer zur Datenkanalzuordnung, ein sog. Voice-Modul zur Vorverarbeitung der Sprachnutzdaten sowie ein Treiber für einen sprachverarbeitenden Signalprozessor oder eine sprachverarbeitende Anwendung vorzusehen. Die genannten Module sind in der angegebenen Reihenfolge jeweils über Eingangs- und Ausgangswarteschlangen gekoppelt. Ein Datentransport erfolgt über die genannten Module in der angegebenen Reihenfolge. Die Steuerung des Datentransports erfolgt durch eine Datenstromsteuerung (Call-Processing), die über den Voice-Multiplexer auf die anderen Module zugreift.

Die angegebene Art des Datentransports erfordert jedoch insbesondere bei einer hohen Anzahl von Datenkanälen eine verhältnismäßig hohe Prozessorleistung. Außerdem werden die Datenpakete in nicht unwesentlicher Weise verzögert

Aus der Druckschrift DE19728878A1 ist eine Anordnung zur Datenübertragung zwischen einem leitungsorientierten und einem paketorientierten Netz bekannt, bei der aus dem paketorientierten Netz eintreffende Nutzdaten aus den jeweiligen Datenpaketen extrahiert und über eine leitungsorientierte Durchschalte-Matrix in das leitungsorientierte Netz weitergeleitet wird. Mit dieser Anordnung lassen sich jedoch nicht die Vorteile der Stream-Architektur nutzen.

Aus dem Dokument WO01/80503A1 ist ein weiteres Verfahren zur Datenübertragung zwischen einem leitungsorientierten und einem paketorientierten Netz bekannt, bei dem Laufzeitverzögerungen bei der Rückübertragung von aus dem leitungsorientierten Netz stammenden Signalen in dasselbe leitungsorientierte Netz vermieden werden können. Entsprechende Laufzeitoptimierungen für Datenübertragungen zwischen dem leitungsorientierten und dem paketorientierten Netz werden jedoch nicht behandelt.

Es ist Aufgabe der vorliegenden Erfindung ein Verfahren sowie eine Anordnung zum Transport von Datenpaketen eines Datenstroms zwischen einem paketorientierten Netzwerk und einem kanalorientierten Datenstrom-Verarbeitungsmodul, insbesondere im Rahmen einer Stream-Architektur anzugeben, das einen geringeren Rechenbedarf sowie eine geringere Laufzeitverzögerung aufweist.

Gelöst wird diese Aufgabe durch ein Verfahren mit den Merkmalen des Patentanspruchs 1. und durch eine Anordnung mit den Merkmalen des Patentanspruchs 6.

Zum Transport von Datenpaketen eines Datenstroms, z.B. aus Sprach-, Video-, Multimedia- und/oder Dateidaten, zwischen einem paketorientierten Netzwerk, z.B. einem lokalen Netz (LAN) oder einem Weitverkehrsnetz (WAN), und mindestens einem kanalorientierten Datenstrom-Verarbeitungsmodul ist insbesondere im Rahmen einer Stream-Architektur eine Datenstromsteuerung zum Steuern des Datenpakettransports vorgesehen, die über ein Datenkanal-Zuordnungsmodul auf ein Schnittstellenmodul zum Austausch der Datenpakete mit dem Netzwerk und/oder auf das mindestens eine Datenstrom-Verarbeitungsmodul zugreift. Das mind. eine Datenstrom-Verarbeitungsmodul ist vorzugsweise vielkanalig ausgestaltet und kann z.B. mittels eines Software-Moduls und/oder eines digitalen Signalprozessors realisiert sein. Durch das Datenkanal-Zuordnungsmodul werden Daten einem oder mehreren Datenkanälen oder Datenkanäle untereinander zugeordnet. Das Datenkanal-Zuordnungsmodul ist über Eingangswarteschlangen des Datenstrom-Verarbeitungsmoduls mit diesem gekoppelt. Erfindungsgemäß wird durch die Datenstromsteuerung eine eine Warteschlangenkennung umfassende Datenkanal-Zuordnungsinformation zum Schnittstellenmodul übermittelt. Anhand einer jeweils übermittelten Datenkanal-Zuordnungsinformation werden die Datenpakete unter Umgehung des Datenkanal-Zuordnungsmoduls direkt vom Schnittstellenmodul zu einer durch die Warteschlangenkennung identifizierten Eingangswarteschlange des Datenstrom-Verarbeitungsmoduls übertragen.

Gegenüber einer herkömmlichen Verwendung einer Stream-Architektur erlaubt die Erfindung eine deutliche Verringerung der Laufzeit von Nutzdatenpaketen zwischen dem paketorientierten Netzwerk und einem Datenstrom-Verarbeitungsmodul unter weitgehender Beibehaltung der Stream-Architektur. Die Laufzeit verringert sich, da von den Nutzdatenpaketen weniger Software-Schichten und insbesondere weniger Eingangs- bzw. Ausgangswarteschlangen zwischen den Software-Schichten zu durchlaufen sind. Darüber hinaus verringert sich auch die zum Datentransport erforderliche Rechenleistung. Infolgedessen lässt sich die Erfindung besonders vorteilhaft in sogenannten eingebetteten ("embedded") Systemen mit einfachen und damit kostengünstigen Prozessoren einsetzen.

Vorteilhafte Ausführungsformen und Weiterbildungen der Erfindung sind in den abhängigen Ansprüchen angegeben.

Nach einer vorteilhaften Ausführungsform der Erfindung kann die Datenkanal-Zuordnungsinformation beim Einrichten eines Datenstroms, insbesondere beim Aufbau einer Verbindung übermittelt werden.

Weiterhin kann durch die Datenstromsteuerung eine Datenkanal-Zuordnungsinformation zum Datenstrom-Verarbeitungsmodul übermittelt werden, anhand der Datenpakete unter Umgehung des Datenkanal-Zuordnungsmoduls direkt vom Datenstrom-Verarbeitungs modul zum Schnittstellenmodul übertragen werden können.

Weiterhin kann die Datenkanal-Zuordnungsinformation, die zum mindestens einen Datenstrom-Verarbeitungsmodul übermittelt wird, eine Adressinformation umfassen, durch die eine zum Schnittstellenmodul übertragene Datenkanal-Zuordnungsinformation identifiziert wird. Diese Adressinformation kann vom jeweils empfangenden Datenstrom-Verarbeitungsmodul mit den zum Schnittstellenmodul zu übertragenden Datenpaketen übermittelt werden. Die vom Datenstrom-Verarbeitungsmodul zum Schnittstellenmodul übermittelte Adressinformation kann von diesem zum schnelleren Zugriff auf eine in einem Kanalzuordnungsspeicher gespeicherte Datenkanal-Zuordnungsinformation verwendet werden. Vorzugsweise gibt die Adressinformation einen jeweiligen Adressversatz der betreffenden Datenkanal-Zuordnungsinformation innerhalb des Kanalzuordnungsspeichers an.

Nach einer vorteilhaften Ausgestaltung des erfindungsgemäßen Verfahrens werden die Datenpakete gemäß dem sog. RTP-Protokoll (Real Time Protocol) übermittelt, das sehr gute Echtzeiteigenschaften aufweist.

Weiterhin kann das mindestens eine Datenstrom-Verarbeitungsmodul durch kanalindividuelle Instanzen einer programmtechnischen Objektklasse realisiert sein.

Ein Ausführungsbeispiel der Erfindung wird nachfolgend anhand der Zeichnung näher erläutert.

Dabei zeigen jeweils in schematischer Darstellung:
Fig 1 eine Gatewayanordnung gemäß der Stream-Architektur zum Transport von Datenpaketen nach dem bisherigen Stand der Technik, und
Fig 2 eine Gatewayanordnung gemäß der Stream-Architektur zum erfindungsgemäßen Transport von Datenpaketen.

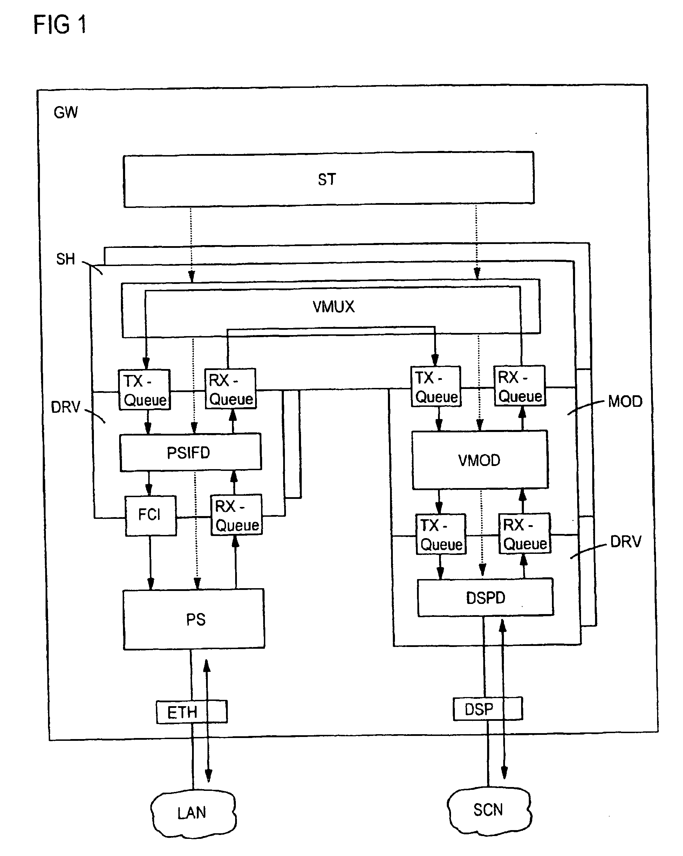

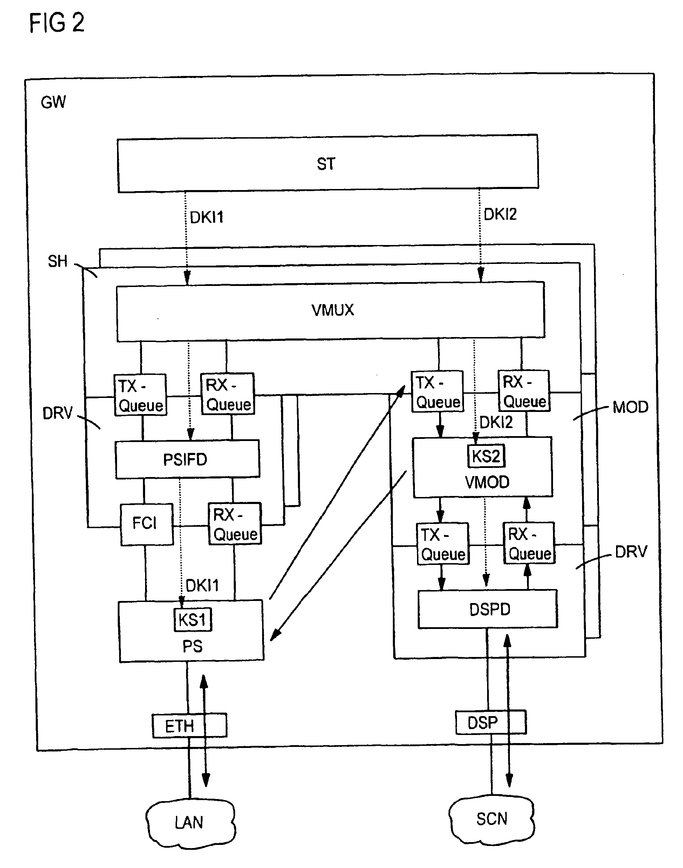

In den **Figuren 1 und 2** ist jeweils eine Gatewayanordnung GW gemäß der Stream-Architektur zum Transport von aus Datenpaketen bestehenden Datenströmen zwischen einem lokalen Netz LAN als paketorientiertem Netzwerk und einem leitungsorientierten Kommunikationsnetz SCN schematisch dargestellt. Die Gatewayanordnung GW ist vorzugsweise als sog. eingebettetes (embedded) System realisiert.

Als Beispiel für die Übertragung der Datenströme sei nachfolgend eine Übertragung von Sprachdatenströmen im Rahmen von Echtzeit-Sprachverbindungen betrachtet. Für andere Arten von Datenströmen, wie z.B. Videodatenströmen, Multimediadatenströmen und/oder Dateidatenströme, gelten die nachfolgenden Ausführungen sinngemäß. Die Datenpakete der Datenströme werden im vorliegenden Ausführungsbeispiel gemäß dem RTP-Protokoll (RTP: Real Time Protocol), das auf dem UDP-Protokoll (UDP: User Datagram Protocol) aufsetzt, übertragen. Das UDP-Protokoll basiert wiederum auf dem Internetprotokoll.

Die Gatewayanorndung GW ist über eine sog. Ethernet-Netzwerkkarte ETH physikalisch an das lokale Netz LAN und über einen digitalen Signalprozessor DSP an das leitungsorientierte Kommunikationsnetz SCN gekoppelt. Der Signalprozessor DSP verfügt über eine Vielzahl von, typischerweise ca. 30, Datenkanälen, die jeweils zur kanalindividuellen Nutzdatenverarbeitung eines jeweiligen Sprachdatenstroms dienen. Dadurch können die Sprachdatenströme beim Übergang aus dem bzw. in das leitungsorientierte Kommunikationsnetz SCN beispielsweise komprimiert bzw. dekomprimiert oder (z.B. gemäß der ITU-T-Empfehlung G.711) kodiert bzw. dekodiert werden.

Die Gatewayanordnung GW weist ein an die Ethernet-Netzwerkkarte ETH gekoppeltes Schnittstellenmodul PS zum Extrahieren und Einspeisen von Datenpaketen aus dem bzw. in das lokale Netz LAN auf. Das Schnittstellenmodul PS erfasst von jedem aus dem lokalen Netz empfangenen Datenpaket unter Anderem dessen UDP-Zielportnummer. Die erfassten UDP-Zielportnummern werden jeweils mit in dem Schnittstellenmodul PS gespeicherten UDP-Portnummern verglichen, die jeweils einem Datenkanal zugeordnet sind. Bei Übereinstimmung einer erfassten UDP-Zielportnummer eines empfangenen Datenpakets mit einer gespeicherten UDP-Portnummer wird dieses Datenpaket dem entsprechend zugeordneten Datenkanal zugeordnet. Durch das Schnittstellenmodul PS werden nur diejenigen empfangenen Datenpakete weitergeleitet, für dessen UDP-Zielportnummer eine Verbindung, d.h. ein Datenkanal eingerichtet ist. Ein derartiges Schnittstellenmodul wird häufig auch als "Packet Sniffer" bezeichnet.

Die Gatewayanordnung GW weist ferner eine Datenstromsteuerung ST z.B. in Form einer Verbindungssteuerung für Sprachverbindungen auf.

Weitere Funktionskomponenten der Gatewayanordnung GW sind gemäß der aus dem Umfeld des Betriebssystems UNIX bekannten Stream-Architektur in Schichten unterteilt. Die Stream-Architektur unterscheidet eine sog. "Stream Head"-Schicht, die eine Schnittstelle zu Benutzerprozessen bildet, eine optionale Modulschicht sowie eine Treiberschicht, die eine externe Schnittstelle bildet.

Im vorliegenden Ausführungsbeispiel sind in der Gatewayanordnung GW sowohl auf Seiten des lokalen Netzes LAN als auch auf Seiten des leitungsorientierten Netzes SCN jeweils eine Treiberschicht DRV vorgesehen. Auf Seiten des leitungsorientierten Netzes SCN schließt sich an die Treiberschicht DRV eine Modulschicht MOD an. Beide Seiten werden durch eine gemeinsame "Stream Head"-Schicht SH gekoppelt.

Im Rahmen angegebenen Stream-Architektur weist die Gatewayanordnung GW auf Seiten des lokalen Netzes LAN einen der Treiberschicht DRV zugehörigen Schnittstellentreiber PSIF auf, der mit dem Schnittstellenmodul PS gekoppelt ist. Auf Seiten des leitungsorientierten Netzes SCN weist die Gatewayanordnung GW ferner einen der Treiberschicht DRV zugehörigen, mit dem Signalprozessor DSP gekoppelten Signalprozessortreiber DSPD sowie ein mit diesem gekoppeltes, der Modulschicht MOD zugehöriges Datenstrom-Verarbeitungsmodul VMOD auf. Das Datenstrom-Verarbeitungsmodul VMOD und der Schnittstellentreiber PSIF sind durch ein der "Stream Head"-Schicht SH zugehöriges Datenkanal-Zuordnungsmodul VMUX miteinander verkoppelt. Die angegebene Kopplung der einzelnen Module VMOD, VMUX bzw. Treiber PSIFD, DSPD erfolgt gemäß der Stream-Architektur über zwischengeschaltete Warteschlangen TX-Queue und RX-Queue. Für jede Übertragungsrichtung und jeden Datenkanal ist hierbei eine separate Warteschlange TX-Queue bzw. RX-Queue eingerichtet. Als Ausnahme ist zwischen dem Schnittstellentreiber PSIFD und dem Schnittstellenmodul PS für Übertragungen in Richtung zum lokalen Netz LAN nur eine einfache Funktionsaufrufschnittstelle FCI vorgesehen.

Die einzelnen Schichten SH, MOD und DRV und damit die Module VMOD, VMUX sowie die Treiber PSIFD, DSPD sind jeweils vielkanalig, d.h. für die parallele Verarbeitung einer Vielzahl von Datenkanälen bzw. Datenströmen bzw. Verbindungen ausgestaltet. Die Vielkanaligkeit ist den Figuren 1 und 2 jeweils durch eine Darstellung mehrerer Ebenen zeichnerisch angedeutet. Die vielkanaligen Module VMOD, VMUX und Treiber PSIFD, DSPD sowie die kanalindividuellen Warteschlangen TX-Queue, RX-Queue werden auf besonders vorteilhafte Weise durch kanalindividuelle Instanzen einer jeweiligen programmtechnischen Objektklasse realisiert. D.h. für jeden zu verarbeitenden Datenkanal bzw. Datenstrom wird eine individuelle Instanz einer programmtechnischen Objektklasse des jeweiligen Moduls VMOD, VMUX bzw. Treibers PSIFD, DSPD bzw. der jeweiligen Warteschlange TX-Queue, RX-Queue erzeugt. Typischerweise werden auf diese Weise ca. 30 Datenkanäle eingerichtet.

Das Schnittstellenmodul PS ist über den Schnittstellentreiber PSIFD an das durch mehrere Instanzen gebildete Datenkanal-Zuordnungsmodul VMUX gekoppelt. Der Schnittstellentreiber PSIFD dient dabei im Wesentlichen zum Verteilen der vom Schnittstellenmodul PS weitergeleiteten Datenpakete auf die verschiedenen kanalindividuellen Instanzen der Stream-Architektur. Ein derartiger Schnittstellentreiber wird häufig auch als "Packet Sniffer Interface Driver bezeichnet".

Das Datenstrom-Verarbeitungsmodul VMOD ist im vorliegenden Ausführungsbeispiel als sog. Voice-Modul realisiert, das eine Vorverarbeitung der übertragenen Datenpakete, z.B. ein Setzen der IP-Datenpaketköpfe vornimmt. Der daran angekoppelte Signalprozessortreiber DSPD steuert den Signalprozessor DSP an.

Das Datenkanal-Zuordnungsmodul VMUX ist im vorliegenden Ausführungsbeispiel als sog. Voice-Multiplexer realisiert und koppelt die Komponenten PSIFD und PS auf Seiten des lokalen Netzes LAN mit den Komponenten VMOD und DSPD auf Seiten des leitungsorientierten Netzes SCN. Durch das Datenkanal-Zuordnungsmodul VMUX werden die Datenkanäle bzw. Instanzen der einen Seite den Datenkanälen bzw. Instanzen der anderen Seite zugeordnet.

Die Datenstromsteuerung ST ist über das Datenkanal-Zuordnungsmodul VMUX bzw. die "Stream Head"-Schicht SH mit den Komponenten PSIFD, PS, VMOD und DSPD gekoppelt. Zum Einrichten und Steuern von Datenströmen und Verbindungen greift die Datenstromsteuerung ST - wie durch punktierte Pfeile angedeutet - über das Datenkanal-Zuordnungsmodul VMUX bzw. die "Stream Head"-Schicht SH steuernd auf die angegebenen Komponenten PSIFD, PS, VMOD und DSPD zu.

**Figur 1** zeigt eine Gatewayanordnung GW beim Datentransport gemäß dem bisherigen Stand der Technik. Der Übertragungsweg der Datenströme wird hierin mittels durchgezogener Pfeile veranschaulicht. Bei der Übertragung eines Datenstroms vom lokalen Netz LAN in Richtung zum leitungsorientierten Netz SCN werden die gemäß dem RTP-Protokoll transportierten Datenpakete des Datenstroms von der Ethernet-Netzwerkkarte ETH extrahiert und über das Schnittsstellenmodul PS, eine Warteschlange RX-Queue, den Schnittstellentreiber PSIFD, eine weitere Warteschlange RX-Queue, das Datenkanal-Zuordnungsmodul VMUX, eine Warteschlange TX-Queue, das Datenstrom-Verarbeitungsmodul VMOD sowie eine weitere Warteschlange TX-Queue zum Signalprozessortreiber DSPD übertragen. Der Signalprozessortreiber DSPD fügt die empfangenen Datenpakete zu einem Datenstrom zusammen und überträgt diesen zum Signalprozessor DPS, der den Datenstrom verarbeitet und schließlich in Richtung des leitungsorientierten Netzes SCN weiterleitet. Bei einer Übertragung eines Datenstroms in umgekehrter Richtung, d.h. vom leitungsorientierten Netz SCN zum lokalen Netz LAN werden die angegebenen Komponenten ETH, PS, PSIFD, VMUX, VMOD, DSPD, DSP - wie durch Figur 1 veranschaulicht - in umgekehrter Richtung durchlaufen.

Da bei der geschilderten Datenstromübertragung gemäß dem Stand der Technik eine verhältnismäßig große Anzahl von Komponenten und insbesondere von Warteschlangen zu durchlaufen sind, wird der Datenstrom erheblich verzögert.

In **Figur 2** ist demgegenüber eine Gatewayanordnung GW zum erfindungsgemäßen Transport von Datenströmen dargestellt. Der Übertragungsweg der Datenströme ist wiederum mittels durchgezogener Pfeile veranschaulicht. Bei dieser Gatewayanordnung GW verfügt das Schnittstellenmodul PS über eine Verbindungstabelle KS1 und das Datenstrom-Verarbeitungsmodul VMOD über eine Adresstabelle KS2.

Zur Übertragung von Datenströmen, z.B. im Rahmen von Sprachverbindungen, wird durch die Datenstromsteuerung ST jedem Datenstrom ein individueller Datenkanal zugeordnet. Auf diese Weise wird ein Einrichten eines jeweiligen Datenstroms in der Gatewayanordnung GW initialisiert. Die einem jeweiligen Datenkanal zugeordneten, vom Schnittstellenmodul PS zu überwachenden UDP-Portnummern werden in der Verbindungstabelle KS1 sowie in der Adresstabelle KS2 gespeichert.

Erfindungsgemäß werden durch die Datenstromsteuerung ST beim Einrichten eines einem Datenkanal zugeordneten Datenstroms eine Warteschlangenkennung DKI1 zum Schnittstellenmodul PS sowie eine Adressinformation DKI2 zum Datenstrom-Verarbeitungsmodul VMOD übermittelt. Die Datenstromsteuerung ST übermittelt die Warteschlangenkennung DKI1 und die Adressinformation DKI2 - wie durch punktierte Pfeile angedeutet - im Rahmen einer Datenstrom-Steuersignalisierung über das Datenkanal-Zuordnungsmodul VMUX bzw. die "Stream Head"-Schicht SH zu den Modulen PS und VMOD. Die Warteschlangenkennung DKI1 wird in der Verbindungstabelle KS1 und die Adressinformation DKI2 in der Adresstabelle KS2 gespeichert.

Durch die Warteschlangenkennung DKI1 wird die dem betreffenden Datenkanal zugeordnete Eingangswarteschlange TX-Queue des Datenstrom-Verarbeitungsmoduls VMOD identifiziert. In der Verbindungstabelle KS1 wird die übermittelte Warteschlangekennung DKI1 der dem betreffenden Datenkanal zugeordneten UDP-Portnummer zugeordnet. Die Adressinformation DKI2 gibt indessen einen Adressversatz (Offset) der Warteschlangenkennung DKI1 innerhalb der Verbindungstabelle KS1 an. Die Adressinformation DKI2 wird in der Adresstabelle KS2 der dem betreffenden Datenkanal zugeordneten UDP-Portnummer zugeordnet. Die Verbindungstabelle KS1 und die Adresstabelle KS2 dienen damit als Kanalzuordnungsspeicher

Bei der Übertragung des Datenstroms vom lokalen Netz LAN in Richtung zum leitungsorientierten Netz SCN werden die gemäß dem RTP-Protokoll transportierten Datenpakete des Datenstroms von der Ethernet-Netzwerkkarte ETH extrahiert und zum Schnittsstellenmodul PS übertragen. Beim Empfang eines jeweiligen Datenpakets versucht das Schnittstellenmodul PS zunächst die im Datenpaket enthaltene UDP-Zielportnummer in der Verbindungstabelle KS1 aufzufinden. Sofern ein übereinstimmender Eintrag aufgefunden wird, liest das Schnittstellenmodul PS die der UDP-Zielportnummer in der Verbindungstabelle KS1 zugeordnete Warteschlangenkennung, hier DKI1, aus. Anschließend leitet das Schnittstellenmodul PS das Datenpaket anhand der ausgelesenen Warteschlangenkennung DKI1 direkt zu der dadurch identifizierten Eingangswarteschlange TX-Queue des Datenstrom-Verarbeitungsmoduls VMOD weiter. Die direkte Übertragung ist in Figur 2 durch einen durchgezogenen Pfeil angedeutet. Die weitere Datenübertragung vom Datenstrom-Verarbeitungsmodul VMOD zum leitungsorientierten Netz SCN verläuft wie bereits im Zusammenhang mit Figur 1 erläutert.

Bei einer Übertragung eines Datenstroms vom leitungsorientierten Netz SCN zum lokalen Netz LAN wird der Datenstrom vom Signalprozessortreiber DSPD in Datenpakete aufgeteilt, die zum Datenstrom-Verarbeitungsmodul VMOD übertragen werden. Durch das Datenstrom-Verarbeitungsmodul VMOD wird jedem dieser Datenpakete die in der Adresstabelle KS2 gespeicherte, der UDP-Portnummer des betreffenden Datenpakets zugeordnete Adressinformation DKI2 beigefügt. Anschließend wird das betreffende Datenpaket vom Datenstrom-Verarbeitungsmodul VMOD direkt zum Schnittstellenmodul PS übertragen. Das Schnittstellenmodul PS kann anhand der beigefügten Adressinformation DKI2, die den Adressversatz der Warteschlangenkennung DKI1 innerhalb der Verbindungstabelle KS1 angibt, den dem übermittelten Datenpaket zugeordneten Datenkanal durch Direktzugriff auf den entsprechenden Eintrag innerhalb der Verbindungstabelle KS1 ermitteln. Auf diese Weise kann ein zeitaufwendiges Durchsuchen der Verbindungstabelle vermieden werden. Das Schnittstellenmodul PS leitet schließlich das betreffende Datenpaket über die Ethernet-Netzwerkkarte ETH in das lokale Netz LAN weiter.

Durch das erfindungsgemäße Verfahren werden die Eingangs- bzw. Ausgangswarteschlangen des Schnittstellenmoduls PS und des Datenstrom-Verarbeitungsmoduls VMOD beim Einrichten des Datenstroms gewissermaßen direkt "verlinkt", wodurch eine zusätzliche, direkte Schnittstelle zwischen den beiden Modulen PS und VMOD eingerichtet wird. Über diese zusätzliche Schnittstelle können Datenpakete unter Umgehung sowohl des Schnittstellentreibers PSIFD als auch des Datenkanal-Zuordnungsmoduls VMUX direkt zwischen dem Schnittstellenmodul PS und dem Datenstrom-Verarbeitungsmodul übertragen werden.

Da die zu übertragenden Datenpakete gegenüber dem Stand der Technik weniger Module, Schichten und Warteschlangen und damit auch weniger Programmroutinen zu durchlaufen haben, verringert sich die Laufzeit der Datenpakete in erheblichem Maße. Darüber hinaus verringert sich auch die zum Datentransport erforderliche Rechenleistung.

## Patentansprüche

1. Verfahren zum Transport von Datenpaketen eines Datenstroms zwischen einem paketorientierten Netzwerk (LAN) und einem kanalorientierten Datenstrom-Verarbeitungsmodul (VMOD), wobei
- zum Steuern des Datenpakettransports eine Datenstromsteuerung (ST) über ein Datenkanal-Zuordnungsmodul (VMUX) auf ein Schnittstellenmodul (PS) zum Austausch der Datenpakete mit dem Netzwerk (LAN) und/oder auf das Datenstrom-Verarbeitungsmodul (VMOD) zugreift,
- das Datenkanal-Zuordnungsmodul (VMUX) über Eingangswarteschlangen (TX-Queue) des Datenstrom-Verarbeitungsmoduls (VMOD) mit diesem gekoppelt ist,
- durch die Datenstromsteuerung (ST) eine eine Warteschlangenkennung (DKI1) umfassende Datenkanal-Zuordnungsinformation zum Schnittstellenmodul (PS) übermittelt wird, anhand der
- die Datenpakete unter Umgehung des Datenkanal-Zuordnungsmoduls (VMUX) direkt vom Schnittstellenmodul (PS) zu einer durch die Warteschlangenkennung (DKI1) identifizierten Eingangwarteschlange (TX-Queue) des Datenstrom-Verarbeitungsmoduls (VMOD) übertragen werden.

2. Verfahren nach Anspruch 1,
**dadurch gekennzeichnet,**
**dass** die Datenkanal-Zuordnungsinformation (DKI1, DKI2) beim Einrichten eines Datenstroms übermittelt wird.

3. Verfahren nach einem der vorhergehenden Ansprüche,
**dadurch gekennzeichnet,**
**dass** durch die Datenstromsteuerung (ST) eine Datenkanal-Zuordnungsinformation (DKI2) zum Datenstrom-Verarbeitungsmodul (VMOD) übermittelt wird, anhand der Datenpakete unter Umgehung des Datenkanal-Zuordnungsmoduls (VMUX) direkt vom Datenstrom-verarbeitungsmodul (VMOD) zum Schnittstellenmodul (PS) übertragen werden.

4. Verfahren nach einem der vorhergehenden Ansprüche,
**dadurch gekennzeichnet,**
**dass** die Datenkanal-Zuordnungsinformation (DKI2), die zum mindestens einen Datenstrom-Verarbeitungsmodul (VMOD) übermittelt wird, eine Adressinformation umfasst, durch die eine zum Schnittstellenmodul (PS) übertragene Datenkanal-Zuordnungsinformation (DKI1)identifiziert wird.

5. Verfahren nach einem der vorhergehenden Ansprüche,
**dadurch gekennzeichnet,**
**dass** die Datenpakete gemäß dem RTP-Protokoll (Real-Time Protocol) übermittelt werden.

6. Anordnung zum Transport von Datenpaketen eines Datenstroms zwischen einem paketorientierten Netzwerk (LAN) und einem kanalorientierten Datenstrom-Verarbeitungsmodul (VMOD), mit
- einem Schnittstellenmodul (PS) zum Austausch der Datenpakete mit dem Netzwerk (LAN),
- einem mit dem Schnittstellenmodul (PS) gekoppelten Dateakanal-Zuordnungsmodul (VMUX), das über kanalindividuelle Eingangswarteschlangen (TX-Queue) des Datenstrom-verarbeitungsmoduls (VMOD) mit diesem gekoppelt ist, sowie
- einer mit dem Datenkanal-Zuordnungsmodul (VMUX) gekoppelten Datenstromsteuerung (ST) zum Steuern des Datenpakettransports, wobei
- das Schnittstellenmodul (PS) einen Kanalzuordnungsspeicher (KS1) zum Speichern einer von der Datenetromateuerung (ST) zu übermittelnden Datenkanal-Zuordnungainformation (DKI1) aufweist,
- die Datenkanal-Zuordnungsinformation (DNI1), eine eine der Eingangswarteschlangen (TX-Queue) identifizierende. Warteschlangenkennung umfasst, und
- zwischen dem Schnittstellenmodul (PS) und dem Datenstrom-Verarbeitungsmodul (VMOD) eine zusätzliche Schnittstelle zum direkten Übertragen der Datenpakete vom Schnittstellenmodul (PS) zu einer durch die gespeicherte warteschlangenkennung (DKI1) identifizierten Eingangwarteschlange (TX-Queue) vorgesehen ist.

7. Anordnung nach Anspruch 6,
**dadurch gekennzeichnet,**
**dass** das Datenstrom-Verarbeitungsmodul (VMOD) einen Kanalzuordnungsspeicher (KS2) zum Speichern einer von der Datenstromsteuerung (ST) zu übermittelnden Datenkanal-Zuordnungsinformation (DKI2) aufweist

8. Anordnung nach Anspruch 6 oder 7,
**dadurch gekennzeichnet,**
**dass** das mindestens eine Datenstrom-Verarbeitungsmodul (VMOD) und/oder das Datenkanal-Zuordnungsmodul (VMUX) durch kanalindividuelle Instanzen einer programmtechnischen Objektklasse realisiert ist.

## Claims

1. Method for transporting data packets of a data stream between a packet-oriented network (LAN) and a channel-oriented data stream processing module (VMOD), in which
- for controlling the data packet transport, a data stream control (ST) accesses, via a data channel allocation module (VMUX), an interface module (PS) for exchanging the data packets with the network (LAN) and/or accesses the data stream processing module (VMOD),
- the data channel allocation module (VMUX) is coupled to the data stream processing module (VMOD) via input queues (TX queue) of the latter,
- the data stream control (ST) transmits a data channel allocation information item comprising a queue identifier (DKI1) to the interface module (PS), by means of which information item
- the data packets are transmitted directly from the interface module (PS) to an input queue (TX queue), identified by the queue identifier (DKI1), of the data stream processing module (VMOD), bypassing the data channel allocation module (VMUX).

2. Method according to Claim 1, **characterized in that** the data channel allocation information item (DKI1, DKI2) is transmitted during the setting-up of a data stream.

3. Method according to one of the preceding claims, **characterized in that** the data stream control (ST) transmits a data channel allocation information item (DKI2) to the data stream processing module (VMOD), by means of which information item data packets are transmitted directly from the data stream processing module (VMOD) to the interface module (PS), bypassing the data channel allocation module (VMUX).

4. Method according to one of the preceding claims, **characterized in that** the data channel allocation information item (DKI2), which is transmitted to the at least one data stream processing module (VMOD), comprises an address information item by means of which a data channel allocation information item (DKI1) transmitted to the interface module (PS) is identified.

5. Method according to one of the preceding claims, **characterized in that** the data packets are transmitted in accordance with the RTP (Real Time Protocol).

6. Arrangement for transporting data packets of a data stream between a packet-oriented network (LAN) and a channel-oriented data stream processing module (VMOD), comprising
- an interface module (PS) for exchanging the data packets with the network (LAN),
- a data channel allocation module (VMUX) coupled to the interface module (PS), which data channel allocation module is coupled to the data stream processing module (VMOD) via channel-specific input queues (TX queue) of the latter, and
- a data stream control (ST), coupled to the data channel allocation module (VMUX), for controlling the data packet transport, in which
- the interface module (PS) has a channel allocation memory (KS1) for storing a data channel allocation information item (DKI1), to be transmitted by the data stream control (ST),
- the data channel allocation information item (DKI1) comprises a queue identifier identifying one of the input queues (TX queue), and
- an additional interface for the direct transmission of the data packets from the interface module (PS) to an input queue (TX queue) identified by the stored queue identifier (DKI1) is provided between the interface module (PS) and the data stream processing module (VMOD).

7. Arrangement according to Claim 6, **characterized in that** the data stream processing module (VMOD) has a channel allocation memory (KS2) for storing a data channel allocation information item (DKI2) to be transmitted by the data stream control (ST).

8. Arrangement according to Claim 6 or 7, **characterized in that** the at least one data stream processing module (VMOD) and/or the data channel allocation module (VMUX) are/is implemented by channel-specific entities of a program-related object class.

## Revendications

1. Procédé de transport de paquets de données d'un flux de données entre un réseau orienté paquets (LAN) et un module de traitement de flux de données orienté canal (VMOD),
- une commande de flux de données (ST) accédant à un module d'interface (PS) pour échanger des paquets de données avec le réseau (LAN) et/ou au module de traitement de flux de données (VMOD) par l'intermédiaire d'un module d'affectation de canaux de données (VMUX) pour commander le transport de paquets de données,
- le module d'affectation de canaux de données (VMUX) étant couplé, par l'intermédiaire de files d'attente d'entrée (TX-Queue) du module de traitement de flux de données (VMOD), à celui-ci,
- une information d'affectation de canaux de données qui comprend un identificateur de file d'attente (DKI1) étant transmis vers le module d'interface (PS) par la commande de flux de données (ST), information à l'aide de laquelle
- les paquets de données sont transmis directement du module d'interface (PS) vers une file d'attente d'entrée (TX-Queue) du module de traitement de flux de données (VMOD) identifiée par l'identificateur de file d'attente (DKI1) sans passer par le module d'affectation de canaux de données (VMUX) .

2. Procédé selon la revendication 1, **caractérisé en ce que** l'information d'affectation de canaux de données (DKI1, DKI2) est transmise lors de l'établissement d'un flux de données.

3. Procédé selon l'une des revendications précédentes, **caractérisé en ce qu'**une information d'affectation de canaux de données (DKI2) est transmise vers le module de traitement de flux de données (VMOD) par la commande de flux de données (ST),information à l'aide de laquelle des paquets de données sont transmis directement du module de traitement de flux de données (VMOD) vers le module d'interface (PS) sans passer par le module d'affectation de canaux de données (VMUX).

4. Procédé selon l'une des revendications précédentes, **caractérisé en ce que** l'information d'affectation de canaux de données (DKI2) qui est transmise vers l'au moins un module de traitement de flux de données (VMOD) comprend une information d'adresse par laquelle est identifiée une information d'affectation de canaux de données (DKI1) transmise vers le module d'interface (PS).

5. Procédé selon l'une des revendications précédentes, **caractérisé en ce que** les paquets de données sont transmis selon le protocole RTP (Real Time Protocol).

6. Arrangement pour le transport de paquets de données d'un flux de données entre un réseau orienté paquets (LAN) et un module de traitement de flux de données orienté canal (VMOD), comprenant:
- un module d'interface (PS) pour échanger des paquets de données avec le réseau (LAN),
- un module d'affectation de canaux de données (VMUX) couplé au module d'interface (PS) et couplé, par l'intermédiaire de files d'attente d'entrée (TX-Queue) du module de traitement de flux de données (VMOD) individuelles aux canaux, à celui-ci, ainsi que
- une commande de flux de données (ST) couplée au module d'affectation de canaux de données (VMUX) pour commander le transport de paquets de données,
- le module d'interface (PS) comportant une mémoire d'affectation de canaux (KS1) pour mettre en mémoire une information d'affectation de canaux de données (DKI1) à transmettre par la commande de flux de données (ST),
- l'information d'affectation de canaux de données (DKI1) comprenant un identificateur de file d'attente qui identifie l'une des files d'attente d'entrée (TX-Queue) et
- une interface supplémentaire étant prévue, entre le module d'interface (PS) et le module de traitement de flux de données (VMOD), pour la transmission directe des paquets de données du module d'interface (PS) vers une file d'attente d'entrée (TX-Queue) identifiée par l'identificateur de file d'attente (DKI1) mis en mémoire.

7. Arrangement selon la revendication 6, **caractérisé en ce que** le module de traitement de flux de données (VMOD) comporte une mémoire d'affectation de canaux (KS2) pour la mise en mémoire d'une information d'affectation de canaux de données (DKI2) à transmettre par la commande de flux de données (ST).

8. Arrangement selon la revendication 6 ou 7, **caractérisé en ce que** l'au moins un module de traitement de flux de données (VMOD) et/ou le module d'affectation de canaux de données (VMUX) est réalisé par des instances d'une classe d'objets relative à un programme individuelles aux canaux.
